# DEMANDE DE BREVET EUROPEEN

(11) **EP 1 089 468 A1**
(43) Date de publication de la demande: **04.04.2001**
(21) Numéro de dépôt: 00402465.9
(22) Date de dépôt: 07.09.2000
(51) Int. Cl.: H04B 15/04

(54) **Procédé de transmission de données utilisateur et de données de contrôle sur des canaux d'un réseau de transmission**

(30) Priorité: 29.09.1999 FR 9912335
(71) Demandeur: Mitsubishi Electric Information Technology Centre Europe B.V., 1101 AG Amsterdam Zuidoost (NL)
(72) Inventeur: Voyer, Nicolas, 35700 Rennes (FR); Belaiche, Vincent, 35700 Rennes (FR)
(74) Mandataire: Maillet, Alain

(57) **Abrégé**

La présente invention concerne un procédé de transmission de données utilisateur et de données de contrôle sur respectivement un canal utilisateur et un canal de contrôle, ledit procédé consistant à transmettre les données de contrôle à des moments prédéterminés, même lorsque aucune donnée utilisateur n'est à transmettre sur le canal de contrôle.

Selon la présente invention, lesdits moments prédéterminés sont espacés temporellement entre eux de manière aléatoire.

## Description

La présente invention concerne un procédé de transmission de données utilisateur et de données de contrôle sur des canaux d'un réseau de transmission.

Un tel réseau est par exemple du type fonctionnant en mode duplex à répartition de fréquences comme ce qui est prévu pour les futurs réseaux pour mobiles UMTS (Universal Mobile Telecommunications System: système universel de télécommunications pour mobile). Dans de tels réseaux, les données utilisateur ainsi que les données de contrôle sont transmises sous forme de paquets modulant une porteuse en quadrature de phase (QPSK = Quadrature Phase Shift Keing), les données utiles étant transmises sur le canal en phase I, alors que les données de contrôle sont transmises sur le canal en quadrature Q.

Dans la suite de la description, le canal en phase I sera dénommé canal de données, alors que le canal en quadrature Q sera dénommé canal de contrôle.

Entre deux transmissions de paquets sur le canal de données, aucune donnée n'est transmise alors que des données de contrôle sont toujours transmises sur le canal de contrôle. En effet, au moment où de nouveaux paquets de données seront à transmettre sur le canal de données, des informations sur les caractéristiques de transmission courantes des canaux entre l'émetteur et le récepteur seront nécessaires à ce dernier. Ces informations lui sont fournies par l'émetteur sous la forme des données de contrôle transmises régulièrement sur le canal de contrôle. Par ailleurs, le canal de contrôle peut porter des informations de contrôle (par exemple, commande de contrôle de puissance) qui concernent le canal de données du lien opposé, c'est-à-dire entre le récepteur à l'émetteur, lequel n'est pas nécessairement muet au moment considéré.

Une transmission continue des données de contrôle n'est cependant pas nécessaire et souhaitable essentiellement pour des raisons de puissance transmise. Ainsi, tout en assurant un suivi des caractéristiques de transmission des canaux, ainsi que la transmission des données de contrôle de puissance du canal de données du lien opposé, les informations de contrôle nécessaires au récepteur lui sont transmises sur le canal de contrôle uniquement à des instants prédéterminés, généralement espacés régulièrement dans le temps, même lorsque aucune donnée utilisateur n'est à transmettre sur le canal de contrôle.

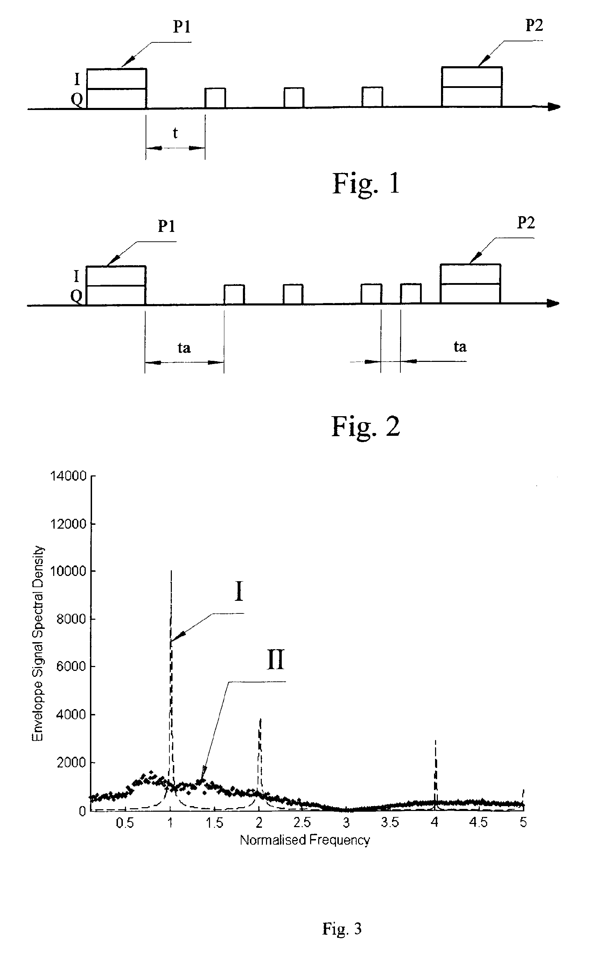

On a représenté à la Fig. 1, le canal de données I sur lequel l'émission entre deux paquets P1 et P2 est interrompue et le canal de contrôle Q sur lequel les émissions de paquets se font à des instants prédéterminés espacés régulièrement dans le temps d'un durée marquée *t*.

On notera qu'ainsi, le débit de transmission sur le canal de contrôle est également réduit.

Le problème soulevé par cette solution est celui des montées et descentes de puissance sur le canal de contrôle qui sont parfaitement régulières dans le temps. Il en résulte des interférences électromagnétiques (EMI) donnant lieu au problème de compatibilité électromagnétique (EMC). Le problème de compatibilité électromagnétique est soulevé lorsque des circuits actifs, tels que par exemple des appareils auditifs ou des stimulateurs cardiaques, sont le sujet d'interférences avec des impulsions de puissance régulières. Bien que ces circuits ne soient pas directement sensibles aux interférences avec des ondes radio, les montées et descentes de puissance de ces mêmes ondes constituent la convolution d'un signal à haute fréquence avec un signal d'enveloppe à la fréquence, plus faible, des montées et des descentes de puissance. Quand la fréquence du signal d'enveloppe est relativement proche de la fréquence de fonctionnement d'un circuit actif, un dysfonctionnement de celui-ci peut avoir lieu avec les conséquences graves qu'il peut en résulter.

Le but de la présente invention est donc de proposer un procédé de transmission de données utilisateur et de données de contrôle consistant à transmettre les données de contrôle à des moments prédéterminés, même lorsque aucune donnée utilisateur n'est à transmettre, et ce, tout en apportant une solution au problème de compatibilité électromagnétique (EMC).

Afin de résoudre ce problème selon l'invention, les données de contrôle sont transmises à des moments prédéterminés, espacés de manière aléatoire dans le temps.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 est un diagramme montrant, dans le temps, l'émission des paquets sur deux canaux I et Q, l'émission sur le canal Q se faisant conformément aux procédés de l'état de la technique, et
La Fig. 2 est un diagramme semblable à celui de la Fig. 1 pour lequel l'émission sur le canal Q se fait conformément au procédé de la présente invention.

On a représenté à la Fig. 2, le canal de données I sur lequel, à l'instar du canal I de la Fig. 1, l'émission entre deux paquets P1 et P2 est interrompue et le canal de contrôle Q sur lequel les émissions de paquets se font à des instants prédéterminés espacés irrégulièrement dans le temps d'une durée *t*_{*a*} aléatoire. Sur la Fig. 2, la première durée *t*_{*a*} est de l'ordre de 4 unités alors qu'elle n'est que d'une unité pour la seconde durée *t*_{*a*}. Entre ces deux durées, les intervalles de temps entre deux émissions sont respectivement de 2 et 3 unités.

Dans le cas où la transmission des données de contrôle avait lieu à des instants prédéterminés régulièrement espacés, le résultat de la transformée de Fourrier du signal d'enveloppe des montées et descentes de puissance donnait une impulsion de Dirac pure à la fréquence de ce signal d'enveloppe et quelques autres impulsions aux fréquences harmoniques.

Avec le procédé de l'invention, la puissance du signal d'enveloppe est étendue dans le domaine fréquentiel, si bien que sa densité spectrale devient plate.

On a représenté à la Fig. 3 la densité spectrale du signal d'enveloppe des montées et descentes de puissance, par une courbe marquée I dans le cas d'émissions périodiques, et par une courbe marquée II dans le cas d'émissions périodiques à des instants prédéterminés espacés les uns des autres aléatoirement. Pour le tracé de la courbe I, les données de contrôle ont été émises un temps sur trois alors que, pour le tracé de la courbe II, elles ont été émises aléatoirement avec des intervalles de temps qui varient entre 0 et deux fois sa dimension normale.

Comme on peut le constater, pour les mêmes fréquences dont les valeurs normalisées valent respectivement 1, 2 et 4, alors que la courbe I présente des pics d'amplitudes respectivement d'environ 10 000, 4000 et 3500, la courbe II présente des amplitudes comprises entre 0 et 1500, ce qui correspond, en moyenne, à une diminution de 16 décibels de la puissance du signal indésiré (notamment pour l'abscisse 1). On constate également qu'il y a, entre les deux courbes I et II, étalement du spectre.

Il en résulte par conséquent une diminution notable des interférences électromagnétiques, et par conséquent, une meilleure compatibilité électromagnétique du système de transmission qui met en oeuvre le procédé de transmission de la présente invention.

## Revendications

1. Procédé de transmission de données utilisateur et de données de contrôle sur respectivement un canal utilisateur et un canal de contrôle, ledit procédé consistant à transmettre les données de contrôle à des moments prédéterminés, même lorsque aucune donnée utilisateur n'est à transmettre sur le canal de contrôle, caractérisé en ce que lesdits moments prédéterminés sont espacés temporellement entre eux de manière aléatoire.

2. Procédé de transmission de données selon la revendication 1, caractérisé en ce que ledit canal de données utilisateur et ledit canal de données de contrôle sont respectivement portés par le canal en phase I et le canal Q en quadrature d'une même porteuse modulée en quadrature de phase.
